# EUROPEAN PATENT APPLICATION

(11) **EP 2 497 586 A1**
(43) Date of publication of application: **12.09.2012**
(21) Application number: 10828105.6
(22) Date of filing: 04.11.2010
(51) Int. Cl.: B22D 17/22, B22C 9/06, B22D 17/14

(54) **VACUUM VALVE DEVICE AND VACUUM DIE-CASTING DEVICE USING THE SAME**

(30) Priority: 06.11.2009 JP 2009255034
(71) Applicant: Sanden Corporation, Isesaki-shi, Gunma 372-8502 (JP)
(72) Inventor: NAKAZATO, Sadayuki, Isesaki-shi Gunma 372-8502 (JP); KIMURA, Tetsuya, Isesaki-shi Gunma 372-8502 (JP); FUJIU, Yoshiaki, Isesaki-shi Gunma 372-8502 (JP)
(74) Representative: Prüfer & Partner GbR European Patent Attorneys
(86) International application number: PCT/JP2010/006505
(87) International publication number: WO 2011/055544

(57) **Abstract**

Provided is a vacuum valve device which is capable of ensuring and maintaining smooth operation of a valve body, and in which an adequate space is ensured as a vacuuming gas flow path, and also provided is a vacuum die-casting device using the vacuum valve device. The vacuum valve device includes a piston rod and a rod seat. The piston rod includes: a rod; a piston formed at one end of the piston rod; and a guide part extending from the piston as far as the rod towards the other end of the piston rod. The rod seat has an insertion hole into which the piston rod is inserted from a first end of the insertion hole and through which the piston rod passes to a second end of the insertion hole. At least a portion of the insertion hole including the first end of the insertion hole forms the gas flow path. The piston is inserted into the first end of the insertion hole when the gas flow path is closed, and the piston is exposed outside of the insertion hole with a portion of the guide part inserted into the first end of the insertion hole when the gas flow path is opened.

## Description

### Technical Field of the Invention

The present invention relates to a vacuum valve device and a vacuum die-casting device, such as for molding, which is provided with the vacuum valve device.

### Background Art of the Invention

Known are various vacuum valve devices which hold and release the vacuum state in a closed vessel by on-off operations of valves. Patent document 1 discloses a vacuum valve, which is formed such that valve plate 8 opens valve opening 4 at its opening position, contacts valve seat 6 at its closing position and departs from valve seat 6 as covering valve opening 4 at its intermediate position.

Patent document 2 discloses a vacuum die-casting device having cylindrical switching-valve element 13 which is located as movable freely in switching-valve chamber 8. In such a vacuum die-casting device, cavity 1 is vacuumed and molten metal is ejected into cavity 1, sequentially as second valve part 13C of switching-valve element 13 moves in switching-valve chamber 8.

### Prior art documents

### Patent documents

Patent document 1: JP2008-025839-A
Patent document 2: JP03-151155-A

### Summary of the Invention

### Problems to be solved by the Invention

The vacuum die-casting device disclosed in patent document 2 is not provided with a vacuum valve as a single body disclosed in patent document 1 because a switching valve mechanism is integrally incorporated in the vacuum die-casting device. However, if the vacuum valve is formed as detachable from the vacuum die-casting device, mechanism of the vacuum die-casting device can be simplified, as achieving easy maintenance.

When the vacuum valve is formed as detachable from the vacuum die-casting device, the problem is how to ensure the vacuuming gas flow path inside the vacuum valve. In addition, when the valving element of the vacuum valve moves to protrude toward the vacuum die-casting device, the valving element should be moved smoothly.

Accordingly, as focused on the above-described problems about a vacuum valve device for vacuum die-casting devices, an object of the present invention is to provide a vacuum valve device and a vacuum die-casting device which uses the vacuum valve device, which are capable of ensuring and maintaining smooth operation of a valving element, and in which an adequate space is ensured as a vacuuming gas flow path.

### Means for solving the Problems

To achieve the above-described object, a vacuum valve device according to the present invention is a vacuum valve device comprising a piston rod which has a rod section, a piston section at one end and a guide section extending from the piston section toward the other end to the rod section, and a rod seat which has an insertion hole to fit together by inserting the piston rod from a first end and penetrating into a second end, characterized in that at least a portion of the insertion hole including the first end of the insertion hole forms the gas flow path, the piston section is fitted together by inserting into the first end of the insertion hole when the gas flow path is closed, and the piston section is exposed outside of the insertion hole with a portion of the guide section fitted together by inserting into the first end of the insertion hole when the gas flow path is opened.

The vacuum valve device of the present invention makes it possible that piston section as a valving element operates smoothly because the piston section is fitted together by inserting into one end of the insertion hole when the gas flow path is closed, and because the piston section is exposed outside of the insertion hole while the guide section is fitted together by inserting into the first end of the insertion hole when the gas flow path is opened. In addition, at least a portion of the insertion hole including the first end of the insertion hole forms the gas flow path, so that the vacuuming gas flow path, which communicates a vacuum pump and a cavity of the die, can be easily ensured.

In the vacuum valve device of the present invention, it is preferable that an outer peripheral surface of the guide section is treated for reducing a slide-frictional force between an inner peripheral surface of the rod seat and the outer peripheral surface. Such a surface treatment can be the hard chromic plating, the nitriding and the ceramic coating. It is preferable that even a side surface of the piston section is treated in the same way. Such a surface treatment more surely enables the piston section as a valving element to operate smoothly.

In the vacuum valve of the present invention, it is preferable that the guide section is formed longer than the piston section, in a length along a rod axial direction. When thus the guide section is formed longer than the piston section, the piston rod can be supported stably in a shaft radial direction with the inner peripheral surface of the rod seat as sufficiently ensuring the vacuuming flow path, when the piston section is exposed outside the insertion hole while the guide section is fitted together by inserting into the first portion of the insertion hole when the gas flow path is opened.

In the vacuum valve of the present invention, it is preferable that the guide section comprises a plural of rib structure bodies which extend from the piston section toward the other end. For example, a plural of rib structure bodies which extend in parallel to the piston rod can be formed around the piston rod with equal intervals, so as to simplify the machining of the rib structure bodies forms. In this case, two rib structure bodies are to be formed in six o'clock and twelve o'clock direction, in a cross section of the piston rod. Similarly, three rib structure bodies are to be formed in four o'clock, eight o'clock and twelve o'clock direction in a cross section of the piston rod.

It is preferable that at least one of the rib structure bodies is formed under a center axis of the piston rod in a vertical line. When a rib structure body is located at a position where the gravity acting on the piston rod can be supported directly, the piston rod can be prevented from being off-centered by its weight in the insertion hole. In addition, it is preferable that the rib structure body, which is formed at a position other than the position under the center axis of the piston rod in the vertical line, is formed slightly shorter (0.5 - 1mm shorter, for example) in a length (rib height) along a rod shaft radial direction than a rib structure body formed under the center axis of the piston rod in the vertical line. Thus, when the rib height includes a back clearance for the rib structure bodies which are located at a position where the gravity acting on the piston rod cannot be supported, the slide-frictional force between the outer peripheral surface of the guide section and the inner peripheral surface of the rod seat can be reduced.

In the vacuum valve of the present invention, it is preferable that the rib structure bodies are formed smaller than a groove between the rib structure bodies, in a length along a rib width direction. Namely, it is preferable that a length of the outer periphery of a rib structure body is shorter than a length of an outer periphery of the groove between the rib structure bodies adjacent to each other, in a cross section of the piston rod. With such a magnitude relation between the rib structure bodies and the groove, the outer peripheral surface of the rib structure body of the guide section and the inner peripheral surface of the rod seat can be fitted together by insertion, so that the piston rod is supported stably in a shaft radial direction while the vacuuming gas flow path is ensured.

The vacuum valve device of the present invention can suitably be used in a vacuum die-casting device. Namely, when various vacuum valve devices as described above are connected to a die of a vacuum die-casting device, the flow path between the die cavity and the vacuum pump can be opened and closed so that a vacuum die-casting device can be provided with a stable operation and an excellent swiftness.

### Effect according to the Invention

The vacuum valve device and the vacuum die-casting device using it, according to the present invention, can make the piston rod smoothed in the piston operation. Therefore the vacuum valve device can be prevented from increasing repair cost as well as damaging component parts when the piston rod in motion collides against the rod seat. In addition, the vacuum die-casting device can be operated swiftly and stably.

### Brief explanation of the drawings

[Fig. 1] Fig. 1 shows a vacuum valve device with a vacuuming gas flow path in an OPEN state according to an embodiment of the present invention, where (a) is a longitudinal section view and (b) is a side view of a piston rod from the left side.
[Fig. 2] Fig. 2 shows measurement positions of dimensions of the vacuum valve device of Fig. 1, where (a) is a longitudinal section view and (b) is a side view of the piston rod from the left side.
[Fig. 3] Fig. 3 is a schematic longitudinal section view which shows a composition of a vacuum die-casting device using the vacuum valve device of Fig. 1.

### Embodiments for carrying out the Invention

Hereinafter, desirable embodiments will be explained as referring to figures.

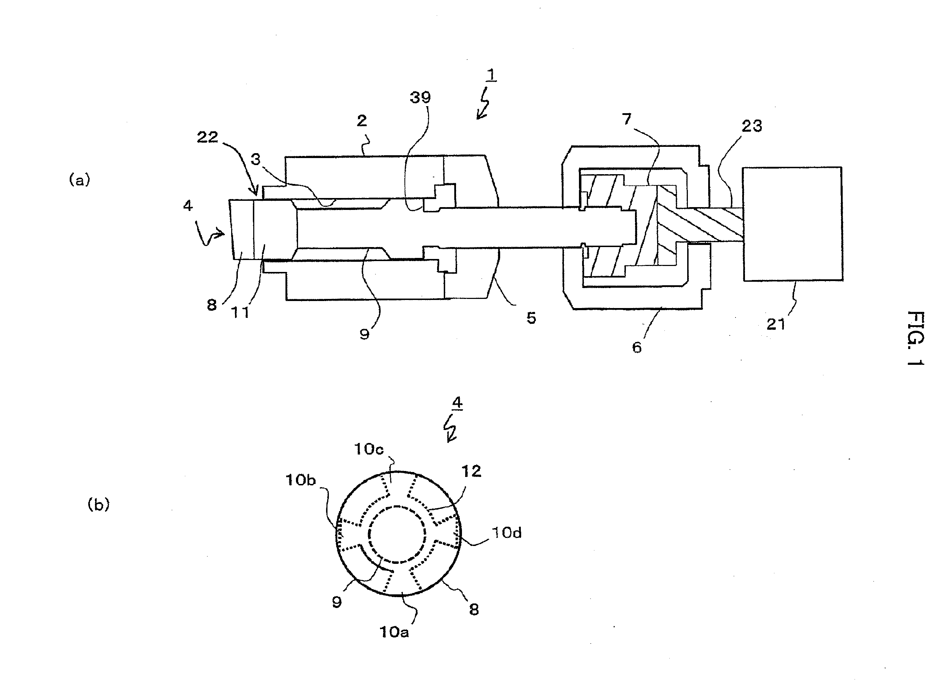

Fig. 1 shows vacuum valve device 1 according to an embodiment of the present invention, specifically the one in a state where a vacuuming gas flow path is opened. The longitudinal section view of Fig. 1 (a) shows that rod seat 2 is provided with insertion hole 3 which penetrates rod seat 2 from the left end to the right end, piston rod 4 being fitted together by inserting into insertion hole 3. Piston rod 4 penetrates rod guide 5, which is bonded on the right end face of rod seat 2, and coupling 6, and the right end thereof is connected to piston joint 7 in coupling 6. Piston joint 7 is connected through hydraulic cylinder rod 23 to hydraulic cylinder 21, and is made to be able to move piston rod 4 by driving force of hydraulic cylinder 21 axially.

Piston section 8, of which outside diameter is approximately equal to the inside diameter of insertion hole 3, is formed at the left end of piston rod 4 which is provided with guide section 11 having grooves 12 and rib structure 10 which extend from piston section 8 to rod section 9 toward the right end side. Fig. 1 (a) shows that a part of guide section 11 is exposed outside of insertion hole 3, so as to form opening 22. Because insertion hole 3 communicates to the outside of the rod seat through opening 22, a vacuuming gas flow path can be composed by opening 22, insertion hole 3 and vacuum pump 41 connected to insertion hole 3. The CLOSED state of the vacuuming gas flow path can be generated from the OPEN state of the vacuuming gas flow path shown in Fig. 1 (a) by shifting the piston rod 4 rightward so that guide section 11 is entirely buried into insertion hole 3 and then piston section 8 is fitted together by inserting into the left end of insertion hole 3. In such CLOSED state, stopper part 39 formed on piston rod 4 contacts rod guide 5, so that piston rod 4 is prevented from coming off insertion hole 3.

Fig. 1 (b) is a side view of piston rod 4 which is viewed from the left side of Fig. 1 (a), where broken lines depict hidden structure behind piston section 8 from the left side. In the schematic side view of Fig. 1 (b), four rib structures 10 (10a - 10d) are formed as extending from cylindrical rod section 9 toward top and bottom and right and left, and grooves 12 are formed between the rib structures. Outer peripheral surfaces of rib structures 10b and 10d are formed slightly smaller in a shaft radial direction than piston section 8, so as to reduce slide resistance against the inner peripheral surface of insertion hole 3.

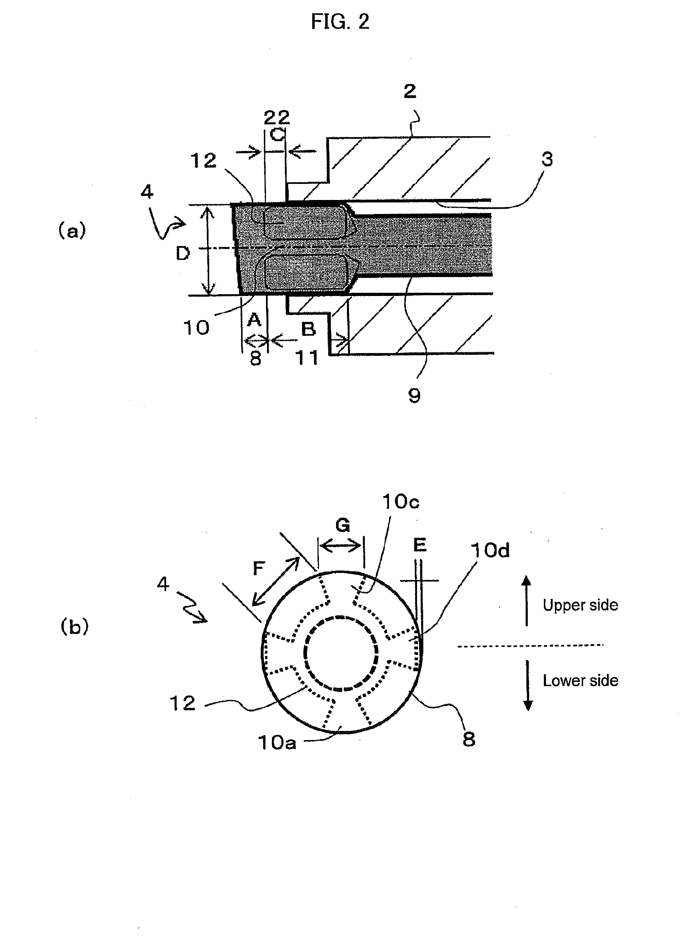

Fig. 2 shows measurement positions A - G of some dimensions for representing the structure of vacuum valve device 1. Fig. 2 (a) is a longitudinal section view showing neighborhoods of the left end of vacuum valve device 1. Fig. 2(b) is a side view of guide section 11 which is viewed from the left side of Fig. 2 (a). Besides, broken lines depict hidden structure behind piston section 8 from the left side. Hereinafter, brief explanation of measurement positions A - G will be itemized, and desirable dimensional correlation of each measurement position will be described.

### [Explanation of measurement position]

A: Length along a rod axial direction of piston section 8. It corresponds to the magnitude of the seal action of a valving element.
B: Length along a rod axial direction of rib structure 10 (guide section 11). It corresponds to a centering action magnitude of the piston rod as well as a formative action magnitude of the vacuuming gas flow path.
C: Length along a rod axial direction of opening 22. It corresponds to an opening size of the valving element at the maximum aperture.
D: Outer diameter of piston section 8. It corresponds to a volume of the vacuum valve device.
E: Height of a gap between the outer peripheral surface of rib structure 10d and the outer peripheral surface of piston 8. It corresponds to a back clearance at the time of processing the guide section.
F: Length along a groove width direction of groove 12. It corresponds to an opening size of the valving element.
G: Length along a rib width direction of rib structure 10c. It corresponds to an opening size of the valving element.

The dimension of measurement position B is preferably greater than the dimension of measurement position A. It is further preferable to satisfy the following relation: 1.9 ≤ B/A ≤ 2.6. The dimension of measurement position G is preferably smaller than the dimension of measurement position F. It is further preferable to satisfy the following relation: 0.4 ≤ G/F ≤ 0.9. Furthermore, it is preferable for a dimensional ratio of measurement position B and measurement position C to be 0.35 ≤ C/B ≤ 0.45. When such a relation between the measurement positions A and B, B and C, or F and G is satisfied, in the vacuum valve device with a vacuuming gas flow path in an OPEN state, rib structure 10 is fitted together by insertion in parallel with insertion hole 3 while the vacuuming gas flow path is sufficiently ensured with groove 12, so that a proper balance between the centering action magnitude of piston rod 4 and the formative action magnitude of the vacuuming gas flow path is achieved.

In addition, it is preferable that the outer peripheral surface of rib structure 10a, which is provided at lower side of piston rod 4 in a vertical direction, has a height equal to the outer peripheral surface of piston section 8, from a viewpoint of centering action of piston rod 4. On the other hand, the outer peripheral surface of rib structures 10b - 10d which are provided at another side, such as upper side and left or right side thereto, are preferably formed so as to have a slight gap against the outer peripheral surface of piston section 8. Specifically, it is preferable for a dimensional ratio of measurement position D and E to satisfy the following relation: 0.025 ≤ E/D ≤ 0.035.

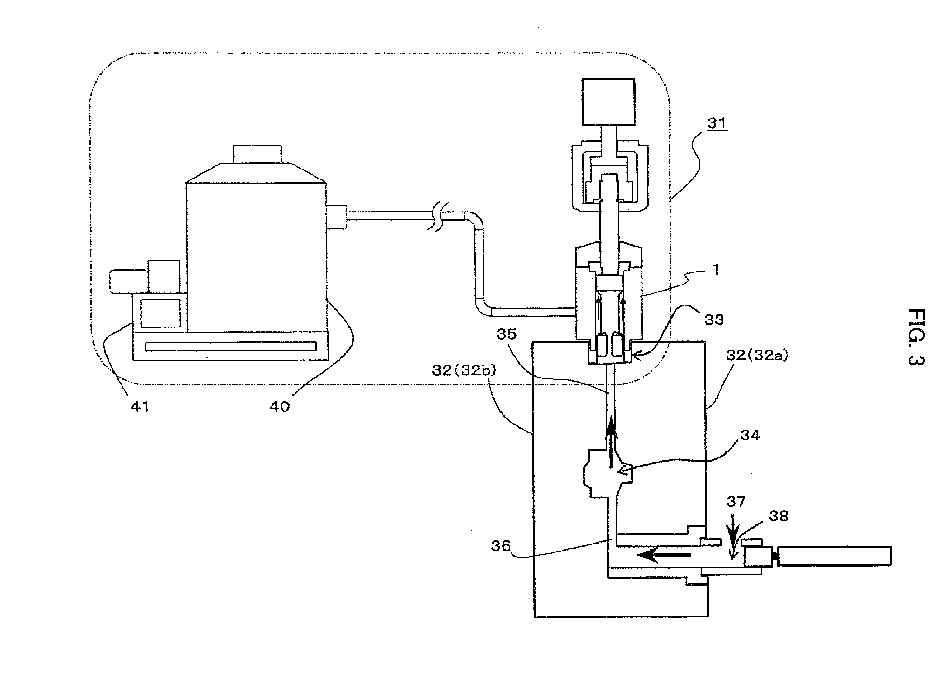

Fig. 3 is a schematic longitudinal section view which shows a composition of vacuum die-casting device 31 using vacuum valve device 1. Vacuum valve device 1, which is a part of vacuum die-casting device 31, is connected to vacuum valve-connecting part 33 provided at a joint part of fixed die 32a and movable die 32b. When the casting process starts, fixed die 32a and movable die 32b are fit together so as to face each other, and then, formed are product-casting part 34 and gaps 35, 36 which communicate thereto.

While such a joining condition of dies 32 is maintained, air in product-casting part 34, as well as gaps 35 and 36, is vacuumed through vacuum valve 1 which is connected through vacuum tank 40 to vacuum pump 41. At this time, vacuum valve 1 is in an OPEN state of the vacuuming gas flow path. Then, piston rod 4 of vacuum valve 1 is moved to the upper side of Fig. 3, so that the state of vacuum valve 1 is transitioned to the CLOSED state of the vacuuming gas flow path. In this state, molten metal 37, such as made of heated metal, is injected from ejection part 38. Molten metal 37 is introduced into product-casting part 34 via gap 36 by vacuum pressure or reduced pressure, which is transmitted from the vacuumed system, and further comes to fill gap 35. Molten metal 37, which has thus filled product-casting part 34 to form a desirable product shape, is cooled down to be solidified, and then, is put out from die 32 by separating fixed die 32a and movable die 32b. As a result, a profile of a casting product is finished up.

### Industrial Applications of the Invention

A vacuum valve device according to the present invention is applicable to an ancillary equipment of vacuum die-casting devices.

### Explanation of symbols

1: vacuum valve device
2: rod seat
3: insertion hole
4: piston rod
5: rod guide
6: coupling
7: piston joint
8: piston section
9: rod section
10, 10a - 10d: rib structure
11: guide section
12: groove
21: hydraulic cylinder
22: opening
23: hydraulic cylinder rod
31: vacuum die-casting device
32: die
32a: fixed die
32b: movable die
33: vacuum valve-connecting part
34: product-casting part
35, 36: gap
37: molten metal
38: ejection part
39: stopper part
40: vacuum tank
41: vacuum pump

## Claims

1. A vacuum valve device comprising:
a piston rod which has a rod section, a piston section at one end and a guide section extending from said piston section toward said other end to said rod section; and
a rod seat which has an insertion hole to fit together by inserting said piston rod from a first end and penetrating into a second end,
**characterized in that**:
at least a portion of said insertion hole including said first end of said insertion hole forms said gas flow path;
said piston section is fitted together by inserting into said first end of said insertion hole when said gas flow path is closed; and
said piston section is exposed outside of said insertion hole with a portion of said guide section fitted together by inserting into said first end of said insertion hole when said gas flow path is opened.

2. The vacuum valve device according to claim 1, wherein an outer peripheral surface of said guide section is treated for reducing a slide-frictional force between an inner peripheral surface of said rod seat and said outer peripheral surface.

3. The vacuum valve device according to claim 1 or 2, wherein said guide section is formed longer than said piston section in a length along a rod axial direction.

4. The vacuum valve device according to any of claims 1 - 3, wherein said guide section comprises a plural of rib structure bodies which extend from said piston section toward said other end.

5. The vacuum valve device according to claim 4, wherein said rib structure bodies are formed smaller than a groove between said rib structure bodies in a length along a rib width direction.

6. A vacuum die-casting device using said vacuum valve device according to any of claims 1 - 5.
